(19) Europäisches Patentamt
European Patent Office
Office européen des brevets

(11) EP 4 169 714 A1

(12) **EUROPEAN PATENT APPLICATION**
published in accordance with Art. 153(4) EPC

(43) Date of publication:
**26.04.2023 Bulletin 2023/17**

(21) Application number: **21826168.3**

(22) Date of filing: **11.06.2021**

(51) International Patent Classification (IPC):
***B32B 27/18** (2006.01)* ***H02K 3/30** (2006.01)*
***H01B 3/30** (2006.01)* ***H01B 3/40** (2006.01)*
***H01B 7/02** (2006.01)* ***B32B 7/025** (2019.01)*

(52) Cooperative Patent Classification (CPC):
**B32B 7/025; B32B 27/18; H01B 3/30; H01B 3/40; H01B 7/02; H02K 3/30**

(86) International application number:
**PCT/JP2021/022408**

(87) International publication number:
**WO 2021/256405 (23.12.2021 Gazette 2021/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.06.2020 JP 2020105751**

(71) Applicants:
- **Sumitomo Seika Chemicals Co., Ltd.**
  **Kako-gun, Hyogo 675-0145 (JP)**
- **Hide Technology, LLC**
  **Hitachi-shi, Ibaraki, 319-1308 (JP)**

(72) Inventors:
- **HAYASHIZAKA, Noriyuki**
  **Kako-gun Hyogo 675-0145 (JP)**
- **KATO, Toshihiko**
  **Kako-gun Hyogo 675-0145 (JP)**
- **KIKUCHI, Hideyuki**
  **Juohcho-Shironooka, 2-chome, Hitachi-shi, Ibaraki**
  **319-1308 (JP)**

(74) Representative: **Mewburn Ellis LLP**
**Aurora Building**
**Counterslip**
**Bristol BS1 6BX (GB)**

# (54) LAYERED BODY OF CONDUCTOR AND INSULATION FILM, COIL, ROTATING ELECTRIC MACHINE, INSULATION COATING, AND INSULATION FILM

(57) Provided is a layered body comprising a conductor and an insulation film containing a metal hydroxide hydrate, wherein properties such as electrical characteristics and physical characteristics can be improved while maintaining an erosion suppressing effect against partial discharge, and manufacturing costs can be reduced. The layered body comprises at least a conductor and an insulation film, wherein: the insulation film includes a first insulation film and a second insulation film; the second insulation film is constituted by a resin composition comprising a metal oxide hydrate; in the resin composition, the content of the metal oxide hydrate is 6-50 parts by mass with respect to 100 parts by mass of the resin; the thickness of the second insulation film is 5 μm or more; the ratio of the thickness of the second insulation film is less than 75% of the thickness of the entire insulation film; and in the insulation film, an inorganic insulation layer is formed when the layered body is exposed to a partial discharge generated by an inverter surge.

FIG. 1

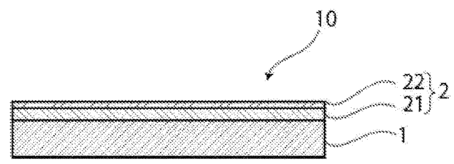


EP 4 169 714 A1

## Description

### TECHNICAL FIELD

The present invention relates to a laminate of a conductor and an insulating coating, a coil, a rotating electric machine, an insulating paint, and an insulating film.

### BACKGROUND ART

As electric wires for use in electrical apparatuses such as motors, electric wires are used on which an insulating layer is formed by applying an insulating paint, which is obtained by dissolving a resin such as a polyimide or a polyamide imide or a resin precursor in an organic solvent, to a conductor surface, followed by baking.

In electrical apparatuses with a high operating voltage, such as motors used at a high voltage, a high voltage is applied to insulated electric wires constituting coils, and when microvoids are present between adjacent insulated electric wires or in an insulating coating, concentration of electric field may occur at that region, resulting in partial discharge. Such partial discharge may cause deterioration of the insulating coating, which may cause premature dielectric breakdown of the coil, leading to a failure of the electrical apparatus.

In recent years, even in apparatuses categorized as the low-voltage-driven type of systems in which motors or the like are driven by inverters used for energy conservation and variable speed, these has been an increasing number of cases where abrupt overvoltages (so-called inverter surges) occur in the drive voltage repeatedly in an extremely short period, leading to dielectric breakdown. The dielectric breakdown is due to partial discharge caused by the overvoltages that occur repeatedly due to the inverter surges.

As a method for improving the electrical insulation lifetime against such partial discharge, it has been found that, when a metal oxide hydrate is filled in an insulating coating, erosion due to partial discharge can be effectively suppressed (Patent Document 1).

### PRIOR ART DOCUMENT

### PATENT DOCUMENT

Patent Document 1: JP 6567797 B1

### SUMMARY OF THE INVENTION

### PROBLEMS TO BE SOLVED BY THE INVENTION

It is an object of the present invention to provide a laminate including a conductor and an insulating coating containing a metal hydroxide hydrate, in which performances such as electrical characteristics and physical characteristics are improved while maintaining an erosion suppressing effect against partial discharge, and manufacturing costs are reduced. It is also an object of the present invention to provide a coil and a rotating electric machine using the laminate as an insulated electric wire, an insulating paint for forming the laminate, and an insulating film.

### MEANS FOR SOLVING THE PROBLEM

The present inventors have conducted intensive studies in order to solve the above problems. As a result, there is provided a laminate including at least a conductor and an insulating coating, in which the insulating coating includes a first insulating coating and a second insulating coating, the second insulating coating is formed of a resin composition containing a metal oxide hydrate, a content of the metal oxide hydrate in the resin composition is 6 to 50 parts by mass with respect to 100 parts by mass of the resin, a thickness of the second insulating coating is 5 $\mu$m or more, and a ratio of the thickness of the second insulating coating is less than 75% of a thickness of the entire insulating coating. An inorganic insulating layer is formed on the insulating coating when the laminate is exposed to partial discharge caused by inverter surges, and it has been found that performances such as electrical characteristics and physical characteristics can be improved while maintaining an erosion suppressing effect against partial discharge, and manufacturing costs can be reduced. The present inventors have conducted further studies based on the findings, leading to the completion of the present invention.

That is, the present invention provides inventions including the following configurations.

Item 1. A laminate including at least a conductor and an insulating coating,

in which the insulating coating includes a first insulating coating and a second insulating coating,
the second insulating coating is formed of a resin composition containing a metal oxide hydrate,
a content of the metal oxide hydrate in the resin composition is 6 to 50 parts by mass with respect to 100 parts by mass of the resin,
a thickness of the second insulating coating is 5 μm or more,
a ratio of the thickness of the second insulating coating is less than 75% of a thickness of the entire insulating coating, and
an inorganic insulating layer is formed on the insulating coating when the laminate is exposed to partial discharge caused by inverter surges.

Item 2. The laminate according to item 1, in which the first insulating coating is formed of a resin containing no filler.
Item 3. The laminate according to item 1 or 2, in which the second insulating coating is not in contact with the conductor.
Item 4. The laminate according to any one of items 1 to 3, in which the first insulating coating and the second insulating coating each contain a common resin.
Item 5. The laminate according to any one of items 1 to 4, in which the metal oxide hydrate is a hydrated alumina.
Item 6. The laminate according to any one of items 1 to 5, in which the resin constituting the resin composition and the insulating coating is at least one selected from the group consisting of a formal resin, a polyurethane, an epoxy resin, a polyester, a polyester imide, a polyetherimide, a polyamide imide, a polyimide, and precursors thereof.
Item 7. The laminate according to any one of items 1 to 6, in which the laminate is in the form of an insulated electric wire or a film.
Item 8. A coil including the insulated electric wire according to item 7.
Item 9. A rotating electric machine including the insulated electric wire according to item 8.
Item 10. An insulating paint including a resin composition containing a metal oxide hydrate, for producing the laminate according to any one of items 1 to 7.
Item 11. An insulating film formed from a resin composition containing a metal oxide hydrate, for forming the insulating coating of the laminate according to any one of items 1 to 7.

## ADVANTAGES OF THE INVENTION

According to the present invention, it is possible to provide a laminate including a conductor and an insulating coating containing a metal hydroxide hydrate, in which performances such as electrical characteristics and physical characteristics are improved while maintaining an erosion suppressing effect against partial discharge, and manufacturing costs are reduced. According to the present invention, it is also possible to provide a coil and a rotating electric machine using the laminate as an insulated electric wire, an insulating paint for forming the laminate, and an insulating film.

## BRIEF DESCRIPTION OF THE DRAWINGS

Fig. 1 is a schematic cross-sectional view illustrating an example of a laminate (film) according to an embodiment of the present invention.
Fig. 2 is a schematic cross-sectional view illustrating an example of a laminate (insulated electric wire) according to an embodiment of the present invention.
Fig. 3 is a schematic cross-sectional view illustrating another example of the laminate (insulated electric wire) according to an embodiment of the present invention.
Fig. 4 is a schematic cross-sectional view illustrating still another example of the laminate (insulated electric wire) according to an embodiment of the present invention.
Fig. 5 is a schematic side view for describing a partial discharge exposure test and a V-t characteristic evaluation method.

## EMBODIMENTS OF THE INVENTION

Hereinafter, a laminate, a coil, a rotating electric machine, an insulating paint, and an insulating film of the present invention will be specifically described. In the present specification, numerical values connected with "to" refer to the numerical range including the numerical values before and after "to" as a lower limit value and an upper limit value. When a plurality of lower limit values and a plurality of upper limit values are mentioned separately, any lower limit value and any upper limit value can be selected and connected with "to".
The laminate of the present invention is a laminate including at least a conductor and an insulating coating

formed on the conductor. In the laminate of the present invention, the insulating coating is formed of at least two layers. That is, the insulating coating includes a first insulating coating and a second insulating coating. The second insulating coating is formed of a resin composition containing a metal oxide hydrate. In the resin composition, the content of the metal oxide hydrate is 6 to 50 parts by mass with respect to 100 parts by mass of the resin contained in the resin composition. The thickness of the second insulating coating is 5 μm or more, and the ratio of the thickness of the second insulating coating is less than 75% of the thickness of the entire insulating coating. An inorganic insulating layer is formed on the insulating coating when the laminate is exposed to partial discharge caused by inverter surges. When the laminate of the present invention includes these configurations, performances such as electrical characteristics and physical characteristics can be improved while maintaining an erosion suppressing effect against partial discharge of the laminate, and manufacturing costs can be reduced. More specifically, for example, in a laminate including a conductor and an insulating coating formed on the conductor, performances such as electrical characteristics and physical characteristics can be improved while maintaining an erosion suppressing effect against partial discharge to be equal to or more than that in a case where the insulating coating includes only the second insulating coating, and manufacturing costs can also be reduced. Hereinafter, the laminate of the present invention will be specifically described with reference to Figs. 1 to 5.

In the present invention, "inverter surge" refers to an abrupt overvoltage superimposed on the drive voltage, which occurs due to switching of an inverter. The switching frequency of an inverter ranges from a relatively low rate of about 1 kHz to a high rate of up to 100 kHz; hence, the frequency of occurrence of inverter surges is also extremely high, from about 1 kHz to 100 kHz. The voltage ranges from a voltage of about 600 V that is superimposed on a drive voltage of 400 V for industrial inverter motors, to a voltage of about 3 kV that is superimposed on the drive voltage of high-voltage-driven inverter motors.

The laminated configuration of a laminate 10 of the present invention is not particularly limited as long as the laminate includes a conductor 1 and an insulating coating 2 including a first insulating coating 21 and a second insulating coating 22. The laminate 10 of the present invention may be in the form of a film having at least the conductor 1 and the insulating coating 2 laminated on the conductor 1, for example, as illustrated in Fig. 1. The laminate 10 of the present invention may be in the form of an insulated electric wire having at least the conductor 1 at a central region and the insulating coating 2 formed around the conductor 1, as illustrated in Figs. 2 to 4. When the laminate 10 of the present invention is in the form of an insulated electric wire, the cross-sectional shape of the laminate is not particularly limited, and examples thereof include a circular shape, an oval shape, and a polygonal shape (which may be a straight angle shape or an irregular shape). Figs. 2 and 3 illustrate insulated electric wires having a circular cross-section. Fig. 4 illustrates an insulated electric wire having a substantially quadrangular cross-section.

The first insulating coating 21 and the second insulating coating 22 included in the insulating coating 2 are coatings (layers) different from each other. Although details of the first insulating coating 21 and the second insulating coating 22 will be described below, the first insulating coating 21 and the second insulating coating 22 are preferably formed of different materials.

The order of lamination of the first insulating coating 21 and the second insulating coating 22 is not limited, and the first insulating coating 21 and the second insulating coating 22 may be laminated in order from the conductor 1 side, or the second insulating coating 22 and the first insulating coating 21 may be laminated in order from the conductor 1 side. From the viewpoint of more suitably exhibiting the effect of the present invention, the first insulating coating 21 and the second insulating coating 22 are preferably laminated in order from the conductor 1 side. From the same viewpoint, the first insulating coating 21 and the second insulating coating 22 are preferably adjacent to each other. From the same viewpoint, the second insulating coating 22 is preferably not in contact with the conductor 1.

The insulating coating 2 may include only the first insulating coating 21 and the second insulating coating 22 (that is, a two-layer structure), or may further include one or more of other insulating coatings (that is, a three-layer or more structure). The other insulating coatings may be a coating having an insulating property that does not impair the effect of the present invention, such as the first insulating coating 21, the second insulating coating 22, or insulating layers 3 and 4 described below.

The laminate 10 of the present invention may further include other layers in addition to the conductor 1 and the insulating coating 2. Examples of the other layers include the insulating layers 3 and 4. For example, Fig. 3 illustrates the laminate 10 (insulated electric wire) including the conductor 1, the insulating layer 3 formed around the conductor 1, and the insulating coating 2 formed around the insulating layer 3. Fig. 4 illustrates the laminate 10 (insulated electric wire) including the conductor 1, the insulating layer 3 formed around the conductor 1, the insulating coating 2 formed around the insulating layer 3, and the insulating layer 4 formed around the insulating coating 2. Examples of the material constituting the insulating layers 3 and 4 include a heat-resistant resin described below.

The insulating layers 3 and 4 may each be formed of the same material as the material of the first insulating coating 21 or the second insulating coating 22, or may each be formed of other insulating materials. The insulating layer 3 and the insulating layer 4 may be formed of the same material, or may be formed of other insulating materials. The insulating layers 3 and 4 may each be provided below the insulating coating 2 (that is, on the conductor 1 side), or may

each be provided over the insulating coating 2 (that is, on the side opposite to the conductor 1 side).

Examples of the other layers include a plating layer of a metal different from the conductor 1, which is formed between the surface of the conductor 1 and the insulating coating 2.

The material constituting the conductor 1 is not particularly limited as long as it is a conductive material, and examples thereof include metals such as aluminum, silver, nickel, and iron, in addition to copper (such as low-oxygen copper, oxygen-free copper, or a copper alloy). The material constituting the conductor 1 can be appropriately selected according to the purpose of the present invention.

The size (such as thickness or diameter) of the conductor 1 is appropriately adjusted according to an application target of the laminate 10. For example, when the laminate 10 is an insulated electric wire, the diameter of the conductor 1 is, for example, 0.02 to 3.2 mm. When the laminate 10 is a film, the thickness of the conductor 1 is, for example, 0.02 to 1.0 mm.

The first insulating coating 21 is preferably formed of a resin. The resin may be a resin excellent in heat resistance (heat-resistant resin), and for example, a resin that is used for known insulated electric wires and the like can be used. Specific examples of the resin include a formal resin, a polyurethane, an epoxy resin, a polyester, a polyamide, a polyester imide, a polyetherimide, a polyamide imide, a polyimide, and precursors thereof. Among these, from the viewpoint of further enhancing heat resistance, an imide-based resin such as a polyester imide, a polyamide imide, or a polyimide is preferably used. The resin constituting the first insulating coating 21 may be one kind or two or more kinds.

Examples of the imide-based resin include an aromatic polyimide obtained by dehydration condensation of a known diamine and an acid anhydride. Examples of the known diamine include 4,4'-diaminodiphenylether, and examples of the acid anhydride include pyromellitic anhydride and biphenyltetracarboxylic dianhydride. As the imide-based resin, a commercially available product may be used, and examples of the commercially available product include Pyre-ML RC-5019 (manufactured by I.S.T Corporation), TORAYNEECE #3000 (manufactured by Toray Industries, Inc.), UPIA (registered trademark)-AT and UPIA (registered trademark)-ST (manufactured by UBE Corporation), PIQ (manufactured by Hitachi Chemical Co., Ltd.), SPI-200N and SPI-300N (manufactured by Nippon Steel Chemical Co., Ltd.), RIKACOAT SN-20 (manufactured by New Japan Chemical Co., Ltd.), Neoheat 8600 (manufactured by TOTOKU TORYO CO., LTD.), and HPC-5012 (manufactured by Showa Denko Materials Co., Ltd.). These may be used alone or as a mixture of two or more kinds thereof. As an example of the mixture of two or more kinds thereof, Pyre-ML RC-5019 and UPIA-AT may be mixed. In the first insulating coating 21, an inorganic or organic filler and air bubbles may be mixed as a third component as long as the performance of the first insulating coating 21 is not deteriorated, but it is preferable not to contain an inorganic or organic filler from the viewpoint of electrical characteristics, physical characteristics, and cost.

The first insulating coating 21 and the second insulating coating 22 may each contain a common resin. From the viewpoint of enhancing the adhesion between the first insulating coating 21 and the second insulating coating 22, the resin contained in the first insulating coating 21 and the second insulating coating 22 is preferably the same kind of resin. When the resin contained in the resin composition constituting the second insulating coating 22 is an imide-based resin, the resin constituting the first insulating coating 21 is also preferably an imide-based resin. When the adhesion between the first insulating coating 21 and the second insulating coating 22 is low, a void is generated between the first insulating coating 21 and the second insulating coating 22, the resistance to partial discharge is lowered, and peeling may occur between the coatings.

The thickness of the first insulating coating 21 is not particularly limited, but is preferably as large as possible in a range in which partial discharge resistance by the second insulating coating 22 is not deteriorated. The thickness of the first insulating coating 21 is preferably 2 to 150 $\mu$m, more preferably 10 to 100 $\mu$m, and further preferably 15 to 80 $\mu$m.

The first insulating coating 21 can be formed, for example, by applying and baking an insulating paint in which the above-described resin is dissolved or dispersed in a solvent. As the solvent for dissolving or dispersing the heat-resistant resin, high-boiling-point solvents such as phenols mainly containing cresol, aromatic alcohols, N-methyl-2-pyrrolidone (NMP), N,N-dimethylacetamide (DMAC), N,N-dimethylformamide (DMF), 1,3-dimethyl-2-imidazolidinone (DMI), carbonate-based solvents, lactone-based solvents, and glycol ether-based solvents are mainly suitably used. The insulating paint may contain a small amount of an acid component or an alkali component for dispersion stabilization. Similarly, water, a low-boiling-point alcohol, or a low-viscosity solvent or the like that contributes to reducing the viscosity of the insulating paint may be contained. A dispersant or a surface-treating agent may be added to the insulating paint, as necessary, to impart hydrophobicity or improve dispersibility.

The second insulating coating 22 is formed of at least a heat-resistant resin and a resin composition containing a metal oxide hydrate. The heat-resistant resin may be a resin excellent in heat resistance (heat-resistant resin), and a known resin that is used for known insulated electric wires and the like can be used. Specific examples of the heat-resistant resin include the same resins as those exemplified for the first insulating coating 21. The heat-resistant resin contained in the second insulating coating 22 may be one kind or two or more kinds.

When the insulating paint for forming the second insulating coating 22 is prepared, the heat-resistant resin may be used in the form of being dissolved or dispersed in a solvent (such as a resin varnish). As described below, it is preferable that a metal oxide hydrate is further dispersed in the insulating paint and used for forming the second insulating

coating 22.

The lower limit of the content of the heat-resistant resin in the second insulating coating 22 is preferably 50 mass% and more preferably 60 mass%, and the upper limit thereof is preferably 94 mass%, more preferably 90 mass%, and further preferably 85 mass%, from the viewpoint of suitably forming an inorganic insulating layer by partial discharge to obtain a laminate excellent in partial discharge resistance.

The metal oxide hydrate may be such that, after the insulating coating 2 of the laminate of the present invention is exposed to partial discharge, an inorganic insulating layer described below is formed on a part of the region where the insulating coating 2 has been formed. The metal oxide hydrate is preferably a hydrated alumina, which forms a particularly strong inorganic insulating layer. Examples of the hydrated alumina include trihydroxide ($Al(OH)_3$) and two variants of aluminum oxide hydroxide (AlO(OH)), boehmite ($\gamma$-aluminum oxide hydroxide) and diaspore ($\alpha$-aluminum oxide hydroxide). Boehmite is categorized into pseudo-crystalline boehmite and microcrystalline boehmite, both of which can be used in the present invention. When the laminate 10 is exposed to partial discharge caused by inverter surges, an inorganic insulating layer, which is formed of at least one of another metal oxide hydrate different from the metal oxide hydrate of the second insulating coating 22 and a metal oxide, is formed. This phenomenon is similar to, for example, a phenomenon in which a hydrated alumina is dehydrated by heating to form a hydrated alumina different from the original hydrated alumina or an alumina oxide. The metal oxide hydrate contained in the second insulating coating 22 may be one kind or two or more kinds.

The metal oxide hydrate is preferably contained in the form of fine particles in the insulating coating 2 and may be uniformly dispersed in the insulating coating 2, and the particle diameter thereof is, for example, preferably 100 nm or less. The shape of the metal oxide hydrate is also not particularly limited, but is preferably flat fine particles having a high aspect ratio (one side/thickness), which facilitates forming the inorganic insulating layer, and the aspect ratio is preferably 4 to 200.

The metal oxide hydrate is preferably uniformly dispersed with a nano-size in the insulating coating 2. The dispersed state of the metal oxide hydrate can be observed by TEM, and is preferably such that, for example, agglomerated particles with a particle diameter of five times or more the particle diameter of the metal oxide hydrate are not observed. When the agglomerated particles are present, partial discharge concentrates on the agglomerated portion, which may lead to dielectric breakdown without the inorganic insulating layer being formed. The nano-size described herein refers to a dispersed particle diameter of 500 nm or less.

The method of mixing the metal oxide hydrate and the resin is not limited as long as it allows the metal oxide hydrate to be uniformly dispersed in the second insulating coating 22, and it is preferable to use a metal oxide hydrate sol. The use of the metal oxide hydrate sol facilitates uniformly dispersing the metal oxide hydrate in the second insulating coating 22. When a metal oxide hydrate powder or gel is used, an agglomerate of the metal oxide hydrate may be formed in the second insulating coating 22, and partial discharge concentrates on the agglomerated portion, which may lead to dielectric breakdown without the inorganic insulating layer being formed.

The content of the metal oxide hydrate in the second insulating coating 22 is 6 to 50 parts by mass with respect to 100 parts by mass of the resin. The lower limit is more preferably 10 parts by mass and further preferably 15 parts by mass. The upper limit is more preferably 50 parts by mass and further preferably 30 parts by mass. When the content of the metal oxide hydrate is less than 6 parts by mass, dielectric breakdown may be caused in a short time. When the content thereof is more than 50 parts by mass, the flexibility of the insulating coating 2 is lost, which may cause a decrease in flexibility.

When the insulating paint for forming the second insulating coating 22 is prepared, it is preferable to form the insulating coating 2 by applying and baking an insulating paint in which a heat-resistant resin is dissolved or dispersed and a metal oxide hydrate is dispersed in a solvent. As the solvent for suitably dispersing the metal oxide hydrate while dissolving or dispersing the heat-resistant resin, high-boiling-point solvents such as phenols mainly containing cresol, aromatic alcohols, N-methyl-2-pyrrolidone (NMP), N,N-dimethylacetamide (DMAC), N,N-dimethylformamide (DMF), 1,3-dimethyl-2-imidazolidinone (DMI), carbonate-based solvents, lactone-based solvents, and glycol ether-based solvents are mainly suitably used. The insulating paint may contain a small amount of an acid component or an alkali component for dispersion stabilization. Similarly, water, a low-boiling-point alcohol, or a low-viscosity solvent or the like that contributes to reducing the viscosity of the insulating paint may be contained. The insulating paint may be mixed with another metal oxide sol as necessary, or a dispersant or a surface-treating agent may be added to the insulating paint, as necessary, to impart hydrophobicity or improve dispersibility.

A resin contained in a general insulating coating is excellent in electrical performance such as a dielectric breakdown voltage and mechanical performance such as flexibility, but when a filler such as a metal oxide is mixed with an insulating layer, it is known that these performances decrease as the ratio of the filler increases. The same applies to the case of the metal oxide hydrate contained in the second insulating coating 22, and in terms of electrical performance, dielectric breakdown voltage, partial discharge inception voltage (PDIV), and partial discharge elimination voltage (PDEV) may be lower than those of an insulating coating not mixed with the metal oxide hydrate, and in terms of mechanical performance, flexibility tends to be lower than that of an insulating coating not mixed with the metal oxide hydrate.

Since a decrease in these performances is proportional to the ratio of the thickness of the second insulating coating 22 formed of a resin composition containing a metal oxide hydrate with respect to the thickness of the entire insulating coating 2, the decrease in performances can be suppressed by reducing the thickness of the second insulating coating 22. However, when the thickness of the second insulating coating 22 is reduced, partial discharge resistance is significantly deteriorated. The thickness of the second insulating coating 22 necessary for maintaining other electrical performance and mechanical performance while maintaining sufficient partial discharge resistance is 5 μm or more and preferably 10 μm or more. In order to maintain electrical performance and mechanical performance other than partial discharge resistance, the thickness of the second insulating coating 22 formed of a resin composition containing a metal oxide hydrate is less than 75%, preferably 50% or less, and more preferably 25% or less, with respect to the thickness of the entire insulating coating 2. Specifically, for example, when the thickness of the entire insulating coating 2 is 37 μm, the thickness of the second insulating coating 22 is preferably 28 μm or less and more preferably 20 μm or less.

Since the metal oxide hydrate is more expensive than the resin and an operation of uniformly mixing the metal oxide hydrate and the resin is also required, in general, the formation of the second insulating coating 22 is more expensive than the formation of the first insulating coating 21. From these facts, when the thickness of the second insulating coating 22 is set to 5 μm or more and the ratio of the thickness of the second insulating coating 22 is set to less than 75% of the thickness of the entire insulating coating 2, the insulating coating 2 is excellent from the viewpoint of dielectric breakdown resistance and cost.

Since a filler is generally more expensive than an organic resin and an operation of mixing the filler and the resin is further required, the price of a resin composition mixed with the filler increases. Therefore, also from the viewpoint of cost, the first insulating coating 21 is preferably formed of a resin containing no filler.

The laminate 10 of the present invention exhibits excellent partial discharge resistance as compared with, for example, a laminate including only an insulating coating, which is formed of a resin composition containing a metal oxide hydrate, and a conductor. Although this principle is not necessarily clear, it is conceivable that PDIV and PDEV are involved. When PDIV and PDEV are high, when a voltage is applied to the laminate, the voltage applied to the space (voltage applied-PDIV or voltage applied-PDEV) becomes lower, that is, the voltage of discharge becomes lower. As a result, it is conceivable that the laminate 10 of the present invention has improved partial discharge resistance.

When the laminate 10 of the present invention is exposed by partial discharge caused by inverter surges, an inorganic insulating layer is formed on a part of the second insulating coating 22. The inorganic insulating layer is formed of at least one of another metal oxide hydrate different from the metal oxide hydrate contained in the resin composition constituting the second insulating coating 22 and a metal oxide. More specifically, when the laminate 10 is exposed to partial discharge caused by inverter surges, an inorganic insulating layer is formed on a region where partial discharge has occurred in the insulating coating 2. In the region where partial discharge has occurred in the insulating coating 2, the insulating coating is slightly eroded by partial discharge.

The inorganic insulating layer is formed, for example, on a side of the insulating coating 2 opposite to the conductor 1 side. Therefore, in this case, after the laminate 10 of the present invention is exposed to partial discharge caused by inverter surges and the inorganic insulating layer is formed, the laminate 10 of the present invention is the laminate 10 including at least the conductor 1, the insulating coating 2 formed on the conductor 1, and the inorganic insulating layer formed on a part of the insulating coating 2 (more specifically, on the upper side of the second insulating coating 22).

In the laminate 10 of the present invention, the inorganic insulating layer formed by the partial discharge forms, for example, a clear layer that can be confirmed with naked eye (for example, the layer is observed as a white layer).

From the viewpoint of providing a laminate excellent in partial discharge resistance, the lower limit of the thickness of the inorganic insulating layer is preferably 50 nm and more preferably 100 nm. When the thickness of the inorganic insulating layer exceeds 100 nm, the electrical insulation lifetime is sharply increased. That is, the inorganic insulating layer achieves a significant effect of acting as a barrier against partial discharge to prevent dielectric breakdown due to partial discharge. As described above, the inorganic insulating layer is formed simultaneously with the elimination of the heat-resistant resin portion, but the thickness thereof varies with factors such as the amount of the heat-resistant resin portion eliminated by partial discharge, the content of the metal oxide hydrate, and the designed thickness of the insulating coating 2 and the actually applied electric field strength. The upper limit of the thickness of the inorganic insulating layer is, for example, 5 μm.

For example, in the case of making an insulation design of the coil of an electrical apparatus (such as a rotating electric machine), the required thickness of the inorganic insulating layer is determined by the actually applied electric field strength and the guaranteed lifetime of the electrical apparatus. The thickness is appropriately designed to achieve thicknesses of the insulating coating 2 and also the inorganic insulating layer suitable for the type of the electrical apparatus.

The inorganic insulating layer may contain voids, and the void ratio of the inorganic insulating layer is preferably 20% or less. As the inorganic insulating layer becomes denser, the effect of preventing dielectric breakdown due to partial discharge becomes more significant.

The inorganic insulating layer of the present invention is formed on a part of the insulating coating 2 by exposing the laminate to partial discharge caused by inverter surges. This partial discharge occurs, for example, at a frequency of 1 kHz to 100 kHz and a voltage of 600 V to 3 kV.

The laminate 10 of the present invention can be produced by laminating at least the first insulating coating 21 and the second insulating coating 22 on the conductor 1. The first insulating coating 21 can be formed, for example, by applying and baking an insulating paint containing the above-described resin. The second insulating coating 22 can be formed, for example, by applying and baking an insulating paint containing a resin and a metal oxide hydrate. For example, when the first insulating coating 21 and the second insulating coating 22 are laminated on the surface of the conductor 1, the laminate can be formed by applying and baking an insulating paint for forming the first insulating coating 21 to the surface of the conductor 1 and then applying and baking an insulating paint for forming the second insulating coating 22. It can be determined by, for example, observation with an optical microscope that the insulating coating is an insulating coating in which the first insulating coating 21 and the second insulating coating 22 are laminated.

Examples of the method of applying the insulating paint include, but are not particularly limited to, a method in which the insulating paint is applied with a coater, a method in which the insulating paint is repeatedly applied and dried with a dip coater or a die to obtain a coating with a predetermined thickness, and spray coating. Baking may be performed, for example, by heating at a high temperature (for example, 300°C or higher) for a predetermined time. The first insulating coating 21 and the second insulating coating 22 can each be formed by repeating a series of application and heating operations a plurality of times until a predetermined thickness of each coating is achieved. In the molding of the second insulating coating 22, the baking temperature and time are adjusted according to the type of the metal oxide hydrate, such that the metal oxide hydrate does not alter to another metal oxide hydrate or a metal oxide by heat.

For example, when the laminate 10 of the present invention is in the form of an insulated electric wire, the insulated electric wire can be produced by repeating an operation of applying the insulating paint onto the perimeter of the conductor 1 or onto another layer that covers the perimeter of the conductor 1, followed by baking to form the insulating coating 2. As described above, the first insulating coating 21 and the second insulating coating 22 can each be formed by repeating a plurality of times (for example, 10 to 20 times) a series of operations (application and heating) of applying the insulating paint onto the conductor 1 at a predetermined thickness, and heating at a high temperature (for example, 300 to 500°C or higher) for a predetermined time (for example, 1 to 2 minutes), until a predetermined thickness of the coating is achieved.

The coil of the present invention can be formed by winding the above-described insulated electric wire around a core. The rotating electric machine of the present invention is a rotating electric machine in which the coil of the present invention is used for a motor or the like. That is, the rotating electric machine of the present invention may be a rotating electric machine produced using the insulated electric wire of the present invention, or may be produced by forming a rotating electric machine using the conductor 1, and then forming the insulating coating 2 on the surface of the conductor 1 to form an electric wire.

Examples of the rotating electric machine include motors and generators.

## EXAMPLES

Hereinafter, the present invention will be more specifically described by means of Examples; however, the present invention is not limited to these Examples at all.

### <Polyimide Paint>

### (Polyimide Paint 1)

In a 10-L four-neck flask equipped with a stirrer and a thermometer, 400.8 g of 4,4'-diaminodiphenylether and 4109 g of NMP were placed, and dissolved by heating to 40°C with stirring under nitrogen. Next, 220.0 g of pyromellitic anhydride and 279.5 g of biphenyltetracarboxylic dianhydride were gradually added to the solution. After the completion of the addition, the mixture was stirred for 1 hour to obtain a polyimide paint in which an aromatic polyamic acid represented by Formula (I) below was dissolved at a concentration of 18.0 mass%. In Formula (I) below, n is an integer of 2 or more.

[Chemical Formula 1]

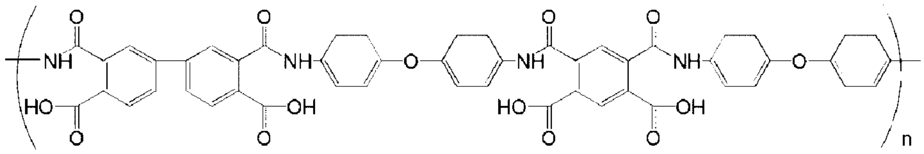

···(I)

(Polyimide Paint 2)

Pyre-ML RC-5019 manufactured by I.S.T Corporation was used.

<Insulating Paint>

Hereinafter, insulating paints 1 to 4 each having the composition shown in Table 1 were produced.

[Table 1]

| | Polyimide paint 1 Resin component (parts by mass) | Polyimide paint 2 Resin component (parts by mass) | Boehmite (parts by mass) |
|---|---|---|---|
| Insulating paint 1 | 80 | - | 20 |
| Insulating paint 2 | - | 85 | 15 |
| Insulating paint 3 | 100 | - | - |
| Insulating paint 4 | - | 100 | - |

(Insulating Paint 1)

The polyimide paint 1 was mixed with 20 parts by mass of boehmite (rectangular flat particles having a particle diameter of about 10 nm × 50 nm, a thickness of about 1 to 5 nm, and an aspect ratio (long side/thickness) of 10 to 50) as a hydrated alumina with respect to 80 parts by mass of the resin content, and the boehmite was uniformly dispersed to obtain an insulating paint 1. A sol prepared by dispersing the boehmite in NMP in advance was used during mixing. To prevent gelling, 6 parts by mass of phosphoric acid ethyl ester (ethyl acid phosphate (Ethyl Phosphate (Mono-and Di- Ester mixture), manufactured by Tokyo Chemical Industry Co., Ltd., monoester content: 35.0 to 47.0%, diester content: 53.0 to 67.0%)) with respect to 100 parts by mass of the boehmite was added to the boehmite sol.

(Insulating Paint 2)

An insulating paint 2 was obtained in the same manner as in the insulating paint 1, except that the polyimide paint 2 was used instead of the polyimide paint 1, and the amount of boehmite was set to 15 parts by mass with respect to 85 parts by mass of the resin content.

(Insulating Paint 3)

The polyimide paint 1 was used as an insulating paint 3 as it was.

(Insulating Paint 4)

The polyimide paint 2 was used as an insulating paint 4 as it was.

<Production of Electric Wire in Which Conductor and Insulating Film Are Laminated>

(Example 1)

An insulated electric wire having an insulating coating with a thickness of 37 μm was produced using the insulating paint 2 and the insulating paint 4 such that the surface of the conductor (copper wire having a diameter of about 1 mm) had the configuration shown in Table 2. Specifically, a step of applying the insulating paint 4 for forming the first insulating coating to a copper conductor (diameter: about 1 mm) and baking for about 1 minute while the temperature was continuously increased from an inlet temperature of 350°C to an outlet temperature of 420°C was repeated until the first insulating coating had the thickness shown in Table 2. Next, the insulating paint 2 for forming the second insulating coating was applied and baked by the same method, and this operation was repeated until the second insulating coating had the thickness shown in Table 2, thereby producing an insulated electric wire having an insulating coating (including the first insulating coating formed of only a polyimide and the second insulating coating formed of a polyimide resin composition containing 15 parts by mass of hydrated alumina) with a thickness of 37 μm on the surface of the conductor.

(Example 2)

An insulated electric wire was produced in the same manner as in Example 1 so as to have the thickness shown in Table 2.

(Example 3)

An insulated electric wire was produced in the same manner as in Example 1 so as to have the thickness shown in Table 2.

(Comparative Example 1)

A step of applying the insulating paint 2 to a conductor (copper wire having a diameter of about 1 mm) and baking for about 1 minute while the temperature was continuously increased from an inlet temperature of 350°C to an outlet temperature of 420°C was repeated, thereby producing an insulated electric wire having an insulating coating (including the second insulating coating formed of a polyimide resin composition containing 15 parts by mass of hydrated alumina) with a thickness of 37 μm on the surface of the conductor.

(Comparative Example 2)

An insulated electric wire having an insulating coating (including the first insulating coating formed of only a polyimide) with a thickness of 37 μm on the surface of the conductor was produced in the same manner as in Comparative Example 1, except that the insulating paint 4 was used instead of the insulating paint 2.

<Production of Film in Which Conductor and Insulating Coating Are Laminated>

(Example 4)

A laminate film of a conductor and an insulating coating was produced using the insulating paint 1 and the insulating paint 3. Specifically, the insulating paint 3 was uniformly applied to the surface of an aluminum foil (thickness: 300 μm) as a conductor so as to have the thickness shown in Table 3, and baked at a temperature of 300°C for 1 hour to form a first insulating coating. Next, the insulating paint 1 was similarly applied onto the first insulating coating and baked to form a second insulating coating, thereby producing a film in which the insulating coating (total thickness: 50 μm) was laminated on the surface of the conductor.

(Example 5)

A film was produced in the same manner as in Example 4 so as to have the thickness shown in Table 3.

(Example 6)

A film was produced in the same manner as in Example 4 so as to have the thickness shown in Table 3.

(Example 7)

A film was produced in the same manner as in Example 4 so as to have the thickness shown in Table 3.

[Evaluation]

<Evaluation of Flexibility>

For each electric wire and each film obtained above, flexibility was evaluated using the following method. The results are shown in Tables 2 and 3. For the electric wires, the test was conducted in accordance with the winding test as defined in JIS C3216-5-1. For the films, the test was conducted in accordance with the cylindrical mandrel bend test method as defined in JIS K5600-5-1.

<Partial Discharge Exposure Test, V-t Characteristic Evaluation, and Confirmation of Formation of Inorganic Insulating Layer>

For each film obtained above, a partial discharge exposure test and V-t characteristic evaluation (voltage-partial discharge lifetime characteristic test) were conducted by the following method. In the testing method, a voltage was applied across an electrode and each film, using a rod electrode. As a specific test method, as illustrated in Fig. 5, an aluminum plate (conductor 1) on which the insulating coating 2 was formed was placed on a stainless steel base 33. A metal ball 32 (2 mmφ) and a copper tube 31 were sequentially placed thereon, and fixed to press under their own weight. The copper tube 31 and the aluminum plate (conductor 1) were connected to a power supply, so that the metal ball 32 served as a high-voltage electrode and the aluminum plate (conductor 1) as a low-voltage electrode. The voltage was applied by generating bipolar square waves at a pulse width of 5 μs and a frequency of 10 kHz, using an inverter pulse generator PG-W03KP-A manufactured by Nissin Pulse Electronics Co., Ltd.

For each electric wire obtained above, the partial discharge exposure test and V-t characteristic evaluation (voltage-partial discharge lifetime characteristic test) were conducted by the following method. Using each electric wire, a twisted pair sample was produced in accordance with JIS C 3216, and a voltage was applied across the two wires. The voltage was applied by generating bipolar square waves at a pulse width of 5 μs and a frequency of 10 kHz, using an inverter pulse generator PG-W03KP-A manufactured by Nissin Pulse Electronics Co., Ltd. In the V-t characteristic test, a voltage of 2.0 kVp or 2.5 kVp was applied, and the time to dielectric breakdown of the sample was measured. For all the samples, the samples after application of 2.5 kVp were visually observed, and the presence or absence of formation of the inorganic insulating layer on the surface was confirmed. The results are shown in Tables 2 and 3.

<Dielectric Breakdown Voltage Test>

Using each electric wire, a twisted pair sample was produced in accordance with JIS C 3216, a voltage applied across the two wires was gradually increased, and the voltage causing dielectric breakdown was measured. As a measuring apparatus, a dielectric breakdown withstand voltage tester (manufactured by YASUDA SEIKI SEISAKUSHO, LTD.) was used. The results are shown in Table 2.

<Partial Discharge Inception Voltage and Partial Discharge Elimination Voltage Test>

Using each electric wire, a twisted pair sample was produced in accordance with JIS C 3216, a voltage applied across the two wires was gradually increased, and the voltage causing partial discharge (partial discharge inception voltage) was measured. Thereafter, the voltage was gradually lowered, and the voltage at which the partial discharge was eliminated was measured. The measurement was performed by connecting a partial discharge measuring machine NPD-1 of Nissin Pulse Electronics Co., Ltd. to an inverter pulse generator PG-W03KP-A of Nissin Pulse Electronics Co., Ltd. The results are shown in Table 2.

<Cost Calculation of Insulating Coating>

For reference, assuming that the cost per unit thickness of the first insulating coating is "1" and the cost per unit thickness of the second insulating coating, which is expensive because of the use of boehmite, is twice "2", the costs of the insulating coatings of Examples and Comparative Examples were compared from the following calculation formula. The results are shown in Tables 2 and 3.

[Thickness (μm) of first insulating coating/Total thickness (μm) of insulating coating × 1] + [Thickness (μm) of second insulating coating/Total thickness (μm) of insulating coating × 2]

[Table 2]

| | | | | Example 1 | Example 2 | Example 3 | Comparative Example 1 | Comparative Example 2 |
|---|---|---|---|---|---|---|---|---|
| | | | | Electric wire | | | | |
| Laminate configuration | Conductor | | | Copper wire (diameter: about 1 mm) | | | | |
| | First insulating coating | Insulating paint 4 | Thickness (μm) | 25 | 19 | 13 | - | 37 |
| | Second insulating coating | Insulating paint 2 | Thickness (μm) | 12 | 18 | 24 | 37 | - |
| Evaluation | Flexibility | Acceptance winding diameter (20% elongation) (electric wire) | | 1d | 2d | 2d | 3d | 1d |
| | V-t characteristic (h) | 10 kHz, 2.5 kVp square wave | | 40.0 | 45.0 | 43.0 | 20.0 | 0.3 |
| | | 10 kHz, 2.0 kVp square wave | | 662.0 | 679.0 | 670.0 | 433.0 | 0.5 |
| | Presence/absence of inorganic insulating layer | Visual inspection (10 kHz, 2.5 kVp square wave) | | Present | Present | Present | Present | Absent |
| | Dielectric breakdown voltage | kV/mm | | 189 | 179 | 172 | 145 | 195 |
| | Partial discharge inception voltage | V | | 910 | 900 | 874 | 866 | 948 |
| | Partial discharge elimination voltage | V | | 892 | 872 | 846 | 830 | 918 |
| | Comparison of cost of insulating coating (based on Comparative Example 2) | | | 1.32 | 1.49 | 1.65 | 2.00 | 1 |

[Table 3]

| | | | | Example 4 | Example 5 | Example 6 | Example 7 | Comparative Example 3 | Comparative Example 4 |
|---|---|---|---|---|---|---|---|---|---|
| | | | | Film | | | | | |
| Laminate configuration | Conductor | | | Aluminum foil (thickness: 300 μm) | | | | | |
| | First insulating coating | Insulating paint 3 | Thickness (μm) | 40 | 27 | 20 | 12 | - | 50 |
| | Second insulating coating | Insulating paint 1 | Thickness (μm) | 10 | 20 | 28 | 36 | 50 | - |
| Evaluation | Flexibility | Mandrel (film)/Acceptance winding diameter (electric wire) | | 2 mm | 2 mm | 2 mm | 2 mm | 2 mm | 2 mm |
| | V-t characteristic (h) | 10 kHz, 3.0 kVp square wave | | 25.0 | 61.0 | 96.0 | 43.0 | 22.0 | 0.1 |
| | | 10 kHz, 2.5 kVp square wave | | 158.0 | 180.0 | 228.0 | 175.0 | 157.0 | 0.2 |
| | Presence/absence of inorganic insulating layer | Visual inspection (10 kHz, 2.5 kVp square wave) | | Present | Present | Present | Present | Present | Absent |
| | Comparison of cost of insulating coating (based on Comparative Example 4) | | | 1.20 | 1.43 | 1.58 | 1.75 | 2.00 | 1 |

## DESCRIPTION OF REFERENCE SIGNS

1: Conductor
2: Insulating coating
21: First insulating coating
22: Second insulating coating
3: Insulating layer

4: Insulating layer
10: Laminate
31: Electrode (copper tube)
32: Metal ball
33: Stainless steel base

## Claims

1. A laminate comprising at least a conductor and an insulating coating,

   wherein the insulating coating includes a first insulating coating and a second insulating coating,
   the second insulating coating is formed of a resin composition containing a metal oxide hydrate,
   a content of the metal oxide hydrate in the resin composition is 6 to 50 parts by mass with respect to 100 parts by mass of the resin,
   a thickness of the second insulating coating is 5 μm or more,
   a ratio of the thickness of the second insulating coating is less than 75% of a thickness of the entire insulating coating, and
   an inorganic insulating layer is formed on the insulating coating when the laminate is exposed to partial discharge caused by inverter surges.

2. The laminate according to claim 1, wherein the first insulating coating is formed of a resin containing no filler.

3. The laminate according to claim 1 or 2, wherein the second insulating coating is not in contact with the conductor.

4. The laminate according to any one of claims 1 to 3, wherein the first insulating coating and the second insulating coating each contain a common resin.

5. The laminate according to any one of claims 1 to 4, wherein the metal oxide hydrate is a hydrated alumina.

6. The laminate according to any one of claims 1 to 5, wherein the resin constituting the resin composition and the insulating coating is at least one selected from the group consisting of a formal resin, a polyurethane, an epoxy resin, a polyester, a polyester imide, a polyetherimide, a polyamide imide, a polyimide, and precursors thereof.

7. The laminate according to any one of claims 1 to 6, wherein the laminate is in the form of an insulated electric wire or a film.

8. A coil comprising the insulated electric wire according to claim 7.

9. A rotating electric machine comprising the insulated electric wire according to claim 8.

10. An insulating paint comprising a resin composition containing a metal oxide hydrate, for producing the laminate according to any one of claims 1 to 7.

11. An insulating film formed from a resin composition containing a metal oxide hydrate, for forming the insulating coating of the laminate according to any one of claims 1 to 7.

FIG. 1

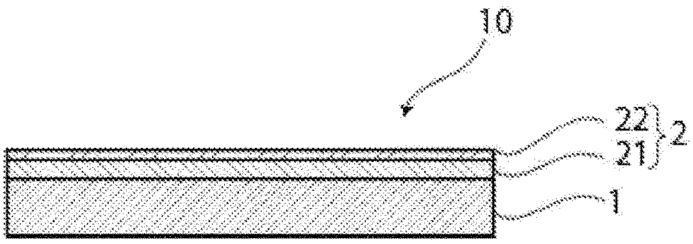


FIG. 2

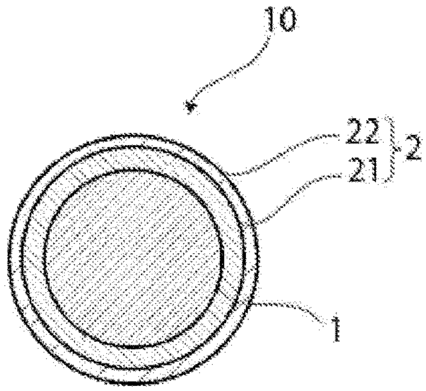


FIG. 3

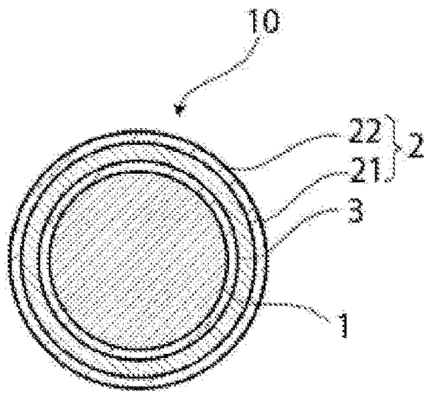


FIG. 4

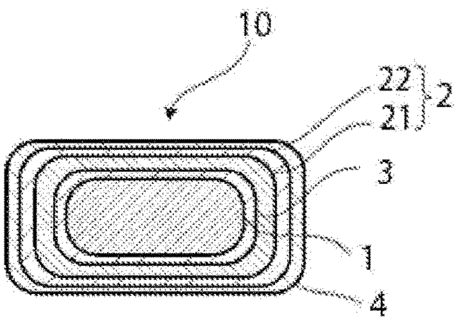

FIG. 5

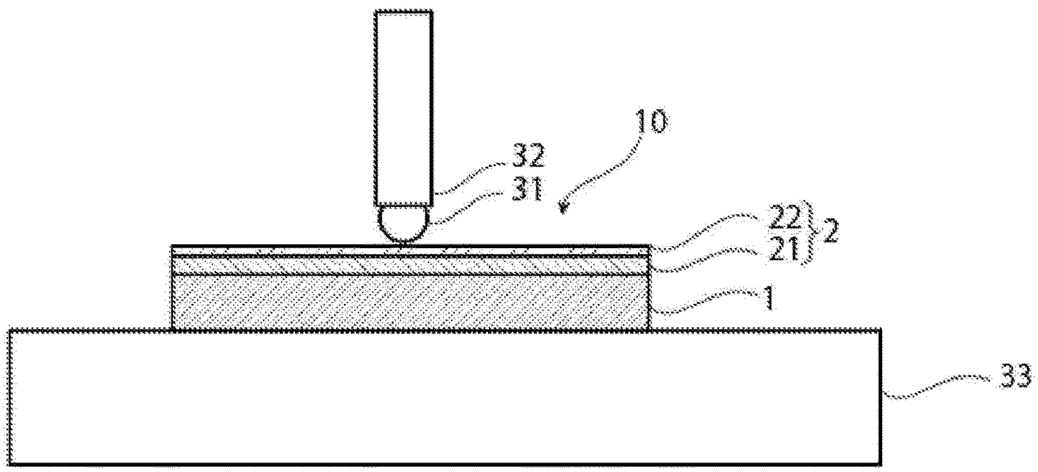

## INTERNATIONAL SEARCH REPORT

International application No.
PCT/JP2021/022408

A. CLASSIFICATION OF SUBJECT MATTER
B32B 27/18(2006.01)i; H02K 3/30(2006.01)i; H01B 3/30(2006.01)i; H01B 3/40(2006.01)i; H01B 7/02(2006.01)i; B32B 7/025(2019.01)i
FI: H01B7/02 A; H01B3/30 B; H01B3/30 D; H01B3/30 E; H01B3/30 F; H01B3/40; H01B3/30 M; H02K3/30; B32B7/025; B32B27/18 Z
According to International Patent Classification (IPC) or to both national classification and IPC

B. FIELDS SEARCHED
Minimum documentation searched (classification system followed by classification symbols)
B32B27/18; H02K3/30; H01B3/30; H01B3/40; H01B7/02; B32B7/025

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 6567797 B1 (SUMITOMO SEIKA CHEMICALS CO., LTD.) 28 August 2019 (2019-08-28) paragraphs [0012]-[0086], fig. 3-5 | 1-11 |
| Y | JP 2-301908 A (SUMITOMO ELECTRIC INDUSTRIES, LTD.) 14 December 1990 (1990-12-14) table 1, fig. 1-2 | 1-11 |

☐ Further documents are listed in the continuation of Box C.

☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 27 July 2021 (27.07.2021) | 10 August 2021 (10.08.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2021/022408

| Patent Documents referred in the Report | Publication Date | Patent Family | Publication Date |
|---|---|---|---|
| JP 6567797 B1 | 28 Aug. 2019 | WO 2020/049784 A1 | |
| JP 2-301908 A | 14 Dec. 1990 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6567797 B